# EUROPÄISCHE PATENTSCHRIFT

(11) **EP 1 448 664 B1**
(45) Veröffentlichungstag und Bekanntmachung des Hinweises auf die Patenterteilung: **21.07.2010**
(21) Anmeldenummer: 02802998.1
(22) Anmeldetag: 08.11.2002
(51) Int. Cl.: C08G 65/26, B01J 27/26, C08G 18/48

(54) **VERFAHREN ZUR HERSTELLUNG VON POLYETHERALKOHOLEN**
METHOD FOR PRODUCING POLYETHER ALCOHOLS
PROCEDE DE PRODUCTION D'ALCOOLS DE POLYETHER

(30) Priorität: 15.11.2001 DE 10156117
(43) Veröffentlichungstag der Anmeldung: 25.08.2004
(73) Patentinhaber: BASF SE, 67056 Ludwigshafen (DE)
(72) Erfinder: BOHRES, Edward, 68161 Mannheim (DE); MÜLLER, Ulrich, 67435 Neustadt (DE); RUPPEL, Raimund, 01127 Dresden (DE); BAUM, Eva, D-01987 Schwarzheide (DE)
(86) Internationale Anmeldenummer: PCT/EP2002/012492
(87) Internationale Veröffentlichungsnummer: WO 2003/042280

(56) Entgegenhaltungen:
- EP-A- 0 743 093
- EP-A- 1 053 787
- WO-A-01/38420
- DE-A- 19 840 846

## Beschreibung

Die Erfindung betrifft ein Verfahren zur Herstellung von Polyetheralkoholen durch Anlagerung von Alkylenoxiden an H-funktionelle Startsubstanzen unter Verwendung von Multimetallcyanidkatalysatoren, häufig auch als DMC-Katalysatoren bezeichnet.

Polyetheralkohole sind wichtige Einsatzstoffe bei der Herstellung von Polyurethanen. Ihre Herstellung erfolgt zumeist durch katalytische Anlagerung von niederen Alkylenoxiden, insbesondere Ethylenoxid und/oder Propylenoxid, an H-funktionelle Startsubstanzen.

Als Katalysatoren werden zumeist lösliche basische Metallhydroxide oder Salze eingesetzt, wobei Kaliumhydroxid die größte praktische Bedeutung hat. Nachteilig bei der Verwendung von Kaliumhydroxid als Katalysator ist vor allem, daß bei der Herstellung von hochmolekularen Polyetheralkoholen zur Bildung von ungesättigten Nebenprodukten kommt, welche die Funktionalität der Polyetheralkohole herabsetzen und sich bei der Herstellung von Polyurethanen sehr nachteilig bemerkbar machen.

Zur Senkung des Gehaltes an ungesättigten Anteilen in den Polyetheralkoholen und zur Erhöhung der Reaktionsgeschwindigkeit bei der Anlagerung von Propylenoxid wird vorgeschlagen, als Katalysatoren Multi-, vorzugsweise Doppelmetallcyanidverbindungen, häufig auch als DMC-Katalysatoren bezeichnet, einzusetzen. Es gibt eine große Zahl von Veröffentlichungen, in denen derartige Verbindungen beschrieben wurden. Ihre Herstellung erfolgt üblicherweise, indem Lösungen von Metallsalzen, zumeist Zinkchlorid, mit Lösungen von Alkali- oder Erdalkalimetallcyanometallaten, wie Kaliumhexacyanocobaltat, oder Cyanometallatsäuren umgesetzt werden. Zur entstandenen Fällungssuspension wird im Normalfall sofort nach dem Fällungsvorgang eine wassermischbare, ein oder mehrere Heteroatome enthaltende Komponente zugegeben. Diese Komponente kann bereits in einer oder in beiden Eduktlösungen vorhanden sein. Die wassermischbare, Heteroatome enthaltende Komponente kann vorzugsweise ein Ether, Polyether, Alkohol, Keton oder eine Mischung aus mindestens zwei der genannten Verbindungen sein. Derartige Verfahren sind häufig beschrieben, beispielsweise in US-A 3 278 457, US-A-3 278 458, US-A-3 278 459, US-A-3 427 256.

Häufig auftretende Nachteile bei der Verwendung der DMC-Katalysatoren sind die lange Anspringzeit und ihre.mitunter unzureichende Aktivität. Dadurch ist es oft erforderlich, mit hohen Einsatzmengen an DMC-Katalysator zu arbeiten, was die Wirtschaftlichkeit des Verfahrens beeinträchtigt. Wenn trotzdem mit niedrigen Katalysatormengen gearbeitet wurde, mußten Nachteile bei den Verarbeitungseigenschaften der Polyetheralkohole hingenommen werden.

Zur Behebung dieses Mangels wurde in US 5,712,216 und US 5,731,407 vorgeschlagen, amorphe DMC-Katalysatoren einzusetzen, die unter anderem eine sehr niedrige Oberfläche aufweisen. Die Oberfläche dieser Katalysatoren liegt unter 30 m²/g, bevorzugt unter 20 m²/g. Doch auch mit diesen Katalysatoren konnten die Nachteile der langen Anspringzeit und der geringen Aktivität nicht überwunden werden.

Aufgabe der Erfindung war es, DMC-Katalysatoren bereitzustellen, die auch bei geringen Einsatzmengen eine hohe Aktivität aufweisen, einen schnellen Reaktionsstart ermöglichen und zu Polyetheralkoholen mit guten Verarbeitungseigenschaften bei der Weiterverarbeitung zu Polyurethanen, insbesondere Polyurethan-Weichschaumstoffen, führen.

Es hat sich überraschenderweise gezeigt, daß mikroporöse DMC-Katalysatoren, insbesondere solche mit kristallinem Aufbau, die eine Oberfläche von über 100 m²/g, vorzugsweise über 200 m²/g und besonders bevorzugt über 450 m²/g, aufweisen, eine besonders hohe katalytische Aktivität besitzen und einen Reaktionsstart praktisch ohne Induktionsperiode ermöglichen.

Gegenstand der Erfindung ist demzufolge ein Verfahren zur Herstellung von Polyetheralkoholen durch Anlagerung von Alkylenoxiden an H-funktionelle Startsubstanzen unter Verwendung von DMC-Katalysatoren, **dadurch gekennzeichnet, daß** die eingesetzten DMC-Katalysatoren mikroporös sind und eine spezifische Oberfläche von mindestens 100 m²/g, bestimmt durch Stickstoffadsorption bei 77K und berechnet nach der Langmuir-Methode gemäß "Pure & Appl. Chem., Vol. 57, No. 4, pp. 603-619, 1985" und "Gregg, S. J.; Sing, K. S. W.; Adsorption, Surface Area and Porosity, Academic Press, London 1982". Unter mikroporöses Material versteht man Materialien mit Porendurchmesser < 2 nm (Pure & Appl. Chem., Vol. 57, No. 4, pp. 603-619, 1985).

Vorzugsweise haben die für das erfindungsgemäße Verfahren geeigneten Katalysatoren eine Oberfläche im Bereich über 100 m²/g. besonders über 200 m²/g und insbesondere zwischen 450 m²/g. Die Obergrenze für die Oberfläche liegt vorzugsweise bei 3000 m²/g. Prinzipiell sind auch Katalysatoren mit einer größeren Oberfläche für das erfindungsgemäße Verfahren geeignet, derartige Katalysatoren sind jedoch schwierig herzustellen.

Die Bestimmung der Oberfläche der DMC-Katalysatoren im Rahmen der vorliegenden Erfindung wurde, wie erwähnt, mit Stickstoff bei 77K an Hand von Sorptionsisothermen (Autosorb AS-6 der Firma Quantachrome) gemäß der Lehre von "Pure & Appl. Chem., Vol. 57, No. 4, pp. 603-619, 1985" und "Gregg, S.J.; Sing, K.S.W.; Adsorption, Surface Area and Porosity, Academic Press, London 1982" durchgeführt. Bei der angegebenen spezifische Oberfläche handelt es sich um die nach dem Langmuir-Modell (Gregg, S.J.; Sing, K.S.W.; Adsorption, Surface Area and Porosity, Academic Press, London 1982) berechneten Werte mit einem für ein Stickstoffmolekül angenommenen Platzbedarf von 0,162 nm². Vor Beginn der Messung wurden die Proben bei 200°C im Hochvakuum, das mittels einer Turbo-Molekularpumpe erzeugt wurde, aktiviert.

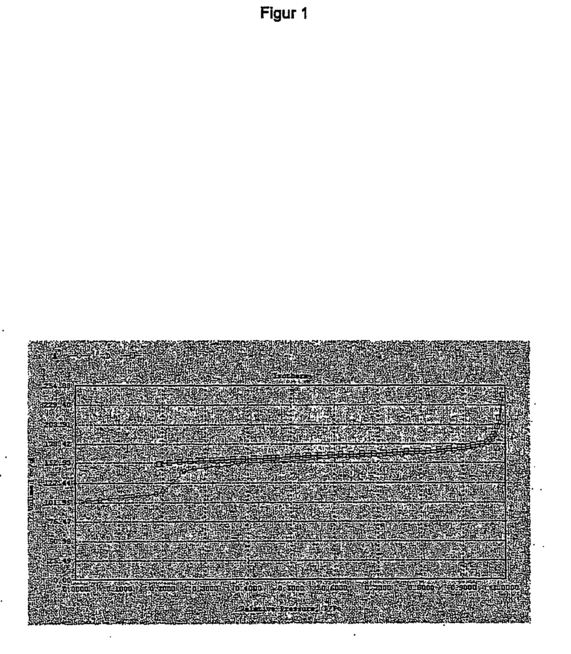

In einer besonders bevorzugten Ausführungsform des erfindungsgemäßen Verfahrens weist die Adsorptionskurve den in Figur 1 dargestellten Hystereseverlauf zwischen Ad- und Desorptionsast auf. Dabei beträgt im Relativdruckbereich von 0,001 bis 0,2 p/p° das mit Stickstoff bei 77K bestimmte Porenvolumen 0,05 bis 0,25 ml/g und im Bereich > 0,2 p/p° 0,1 bis 0,5 ml/g, wobei der Isothermenverlauf im Relativdruckbereich 0,005 bis 0,35 p/p° ein deutliche Stufe aufweist. Die Druckangabe p/p° beschreibt das Verhältnis vom eingestellten Druckpunkt p zum Sättigungsdruck p° bei der jeweiligen Untersuchungstemperatur.

Die für das erfindungsgemäße Verfahren eingesetzten Multimetallcyanid-Katalysatoren haben die allgemeine Formel:

M¹ₐ[M²(CN)_{b}(A)_{c}]_{d}·fM¹_{g}Xₙ·h(H₂0) eL·kP (I),

wobei
- M¹: ein Metallion, ausgewählt aus der Gruppe, enthaltend Zn2+, Fe2+, Co3+, Ni2+, Mn2+, Co2+, Sn2+, Pb2+, Mo4+, Mo6+, A13+, V4+, V5+, Sr2+, W4+, W6+, Cr2+, Cr3+, Cd2+, La3+,Ce3+,Ce4+, Eu3+, Mg2+, Ti3+, Ti4+, Ag+, Rh1+, Ru2+, Ru3+, Pd2+,
- M²: ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+
bedeuten und M¹ und M² verschieden sind,
- A: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- X: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: ein mit Wasser mischbarer Ligand, ausgewählt aus der Gruppe, enthaltend Alkohole Aldehyde, Ketone, Ether, Polyether, Ester, Polyester, Polycarbonat, Harnstoffe, Amide, Nitrile, und Sulfide oder deren Mischungen,
- P: ein organischer Zusatzstoff, ausgewählt aus der Gruppe, ent- haltend Polyether, Polyester, Polycarbonate, Polyalkylen- glykolsorbitanester, Polyalkylenglykolglycidylether, Poly- acrylamid, Poly(acrylamid-co-acrylsäure), Polyacrylsäure, Poly(acrylamid-co-maleinsäure), Polyacrylnitril, Polyalkyl- acrylate, Polyalkylmethacrylate, Polyvinylmethylether, Poly- vinylethylether, Polyvinylacetat, Polyvinylalkohol, Poly-N- vinylpyrrolidon, Poly(N-vinylpyrrolidon-co-acrylsäure), Poly- vinylmethylketon, Poly(4-vinylphenol), Poly(acrylsäure-co- styrol), Oxazolinpolymere, Polyalkylenimine, Maleinsäure und Maleinsäureanhydridcopolymer, Hydroxyethylcellulose, Polyacetate, ionische oberflächen und grenzflächenaktive Verbindungen, Gallensäure oder deren Salze, Ester oder Amide, Carbonsäureester mehrwertiger Alkohole und Glycoside
sowie
a, b, d, g und n ganze oder gebrochene Zahlen größer null, c, f, e, h und k ganze oder gebrochene Zahlen größer gleich null sind, wobei mindestens eine Zahl ungleich null ist,
wobei
a, b, c, und d, sowie g und n so ausgewählt sind, dass die Elektroneutralität gewährleistet ist.

Diese Katalysatoren können kristallin oder amorph sein. Für den Fall, dass k gleich null ist, sind kristalline Doppelmetallcyanidverbindungen bevorzugt. Im Fall, dass k größer null ist, sind sowohl kristalline, teilkristalline, als auch substantiell amorphe Katalysatoren bevorzugt.

Von den modifizierten Katalysatoren gibt es verschiedene bevorzugte Ausführungsformen.

Eine bevorzugte Ausführungsform sind Katalysatoren der Formel (I), bei denen k größer null ist.
Der bevorzugte Katalysator enthält dann:
mindestens eine Multimetallcyanidverbindung
mindestens einen organischen Liganden
mindestens einen organischen Zusatzstoff P.

Bei einer anderen bevorzugten Ausführungsform ist k gleich null oder nimmt einen solchen Wert an, daß der Gehalt der Komponente P maximal 4 Gew.-%, bezogen auf die Verbindung der allgemeinen Formel (I) ist. Optional ist auch e gleich null und X ausschließlich Carboxylat, bevorzugt Formiat, Acetat und Propionat.

Bei einer anderen, besonders bevorzugten Ausführungsform der DMC-Katalysatoren ist f größer null, vorzugsweise zwischen null und 6. Bei dieser Ausführungsform, bei der im DMC-Katalysator ein Metallsalz vorhanden ist, besitzt der Katalysator eine Struktur, die katalytisch besonders aktiv ist.

Bevorzugt bei dieser Ausführungsform haben die Doppelmetallcyanid-Katalysatoren eine kristalline Struktur.

Vorteilhaft sind Doppelmetallcyanid-Katalysatoren, die kristallin und plättchenförmig sind, wie in WO 00/74845 beschrieben.

Die Herstellung der erfindungsgemäßen Katalysatoren erfolgt durch Vereinigung einer Metallsalz-Lösung mit einer Cyanometallat-Lösung, die optional sowohl einen organischen Liganden L als auch einen organischen Zusatzstoff P enthalten können. Anschließend werden der organische Ligand und optional der organische Zusatzstoff zugegeben.

Bei einer bevorzugten Ausführungsform der Katalysatorherstellung wird zunächst eine inaktive Multimetallcyanid-Phase hergestellt und diese anschließend durch Umkristallisation, beispielsweise mittels Änderung des pH-Wertes der Fällungslösung, durch Temperaturerhöhung, oder durch Zusatz von weiterer Eduktlösung, in eine aktive Multimetallcyanidphase überführt, wie in WO 01/64772 beschrieben.

Bei einer anderen bevorzugten Ausführungsform der Katalysatoren sind f, e und k ungleich Null. Dabei handelt es sich um DMC-Katalysatoren, die einen mit Wasser mischbaren organischen Liganden, im allgemeinen in Mengen von 0,5 bis 30 Gew.-%, und einen organischen Zusatzstoff, beispielsweise Polyetheralkohole, im allgemeinen in Mengen von 5 bis 80 Gew.-%, enthalten, wie beispielsweise in WO 98/16310 beschrieben.

Wesentlich für die Struktur der Multimetallcyanid-Katalysatoren ist auch der Energieeintrag bei seiner Herstellung. Die Multimetallcyanid-Katalysatoren können bevorzugt unter starkem Rühren, beispielsweise bei 24000 U/Min mit einem Turrax®-Rührer hergestellt werden, wie beispielsweise in US 5,470,813 beschrieben.

Der hergestellte Katalysator kann durch Filtration oder Zentrifugieren isoliert und im Vakuum getrocknet werden. Der getrocknete Katalysator wird dann zermahlen, wie beispielsweise in US 3,829,505 und US 5,714,639 beschrieben. Der Katalysator kann aber auch durch eine Sprühtrocknung oder Gefriertrocknung getrocknet werden, wie beispielsweise in US 5,998,672 beschrieben.

Im allgemeinen ist es schwierig vorauszusagen, welche Oberfläche ein Multimetallcyanid-Katalysator haben wird. Daher ist eine Möglichkeit des erfindungsgemäßen Verfahrens, die Oberfläche der Multimetallcyanid-Katalysatoren nach ihrer Herstellung zu bestimmen und die geeigneten Katalysatoren auszuwählen.

Es ist natürlich möglich und auch bevorzugt, die Herstellung der Katalysatoren so zu steuern, daß mit großer Wahrscheinlichkeit Katalysatoren mit der gewünschten Oberfläche resultieren, um Fehlchargen möglichst zu verringern.

Dazu ist es, neben den bereits genannten Maßnahmen, vorteilhaft, die Herstellung der Katalysatoren in Gegenwart mindestens einer oberflächenaktiven Verbindung durchzuführen. Als oberflächenaktive Verbindungen eignen sich beispielsweise Alkylenoxid-Blockpolymerisate, insbesondere difunktionelle Ethylenoxid/Propylenoxid-Copolymere, oder alkoxylierten Fettsäuren.

Eine weitere vorteilhafte Variante zur Herstellung von Multimetallcyanid-Katalysatoren mit der erfindungsgemäßen Oberfläche besteht in der Verwendung einer Cyanometallat-Säure als Cyanometallat-Verbindung. Möglicherweise wird dadurch, daß es in diesem Fall nicht zum Zwangsanfall eines Salzes kommt, die Oberfläche der Multimetallcyanid-Katalysatoren günstig beeinflußt.

Zur Herstellung der Polyetheralkohole kann der DMC-Katalysator in Form von Pulver oder in Form einer Suspension eingesetzt werden. Geeignete Suspensionen sind beispielsweise in WO 00/74843 beschrieben.

Die erfindungsgemäße Herstellung von Polyetheralkoholen erfolgt, wie ausgeführt, indem man Alkylenoxide unter Verwendung der beschriebenen Katalysatoren an H-funktionelle Startsubstanzen anlagert.

Als Alkylenoxide können alle bekannten Alkylenoxide verwendet werden, beispielsweise Ethylenoxid, Propylenoxid, Butylenoxid, Styroloxid. Insbesondere werden als Alkylenoxide Ethylenoxid, Propylenoxid und Mischungen aus den genannten Verbindungen eingesetzt.

Als Startsubstanzen kommen H-funktionelle Verbindungen zum Einsatz. Insbesondere werden Alkohole mit einer Funktionalität von 1 bis 8, vorzugsweise 2 bis 8, eingesetzt. Zur Herstellung von Polyetheralkoholen, die für Polyurethan-Weichschaumstoffe eingesetzt werden, kommen als Startsubstanzen insbesondere Alkohole mit einer Funktionalität von 2 bis 4, insbesondere von 2 und 3, zum Einsatz. Beispiele sind Ethylenglykol, Propylenglykol, Glyzerin, Trimethylolpropan, Pentaerythrit. Bei der Anlagerung der Alkylenoxide mittels DMC-Katalysatoren ist es vorteilhaft, zusammen mit oder an Stelle von den genannten Alkoholen deren Umsetzungsprodukte mit Alkylenoxiden, insbesondere Propylenoxid, einzusetzen. Derartige Verbindungen haben vorzugsweise eine Molmasse bis 500 g/mol. Die Anlagerung der Alkylenoxide bei der Herstellung dieser Umsetzungsprodukte kann mit beliebigen Katalysatoren erfolgen, beispielsweise mit basischen Katalysatoren. Die Polyetheralkohole für die Herstellung von Polyurethan-Weichschaumstoffen haben zumeist eine Hydroxylzahl im Bereich zwischen 20 und 100 mgKOH/g.

Die Anlagerung der Alkylenoxide bei der Herstellung der für das erfindungsgemäße Verfahren eingesetzten Polyetheralkohole kann nach den bekannten Verfahren erfolgen. So ist es möglich, daß die Polyetheralkohole nur ein Alkylenoxid enthalten. Bei Verwendung von mehreren Alkylenoxiden ist eine sogenannte blockweise Anlagerung, bei der die Alkylenoxide einzeln nacheinander angelagert werden, oder eine sogenannte statistische Anlagerung, bei der die Alkylenoxide gemeinsam zudosiert werden, möglich. Es ist auch möglich, bei der Herstellung der Polyetheralkohole sowohl blockweise als auch statistische Abschnitte in die Polyetherkette einzubauen.

In einer besonderen Ausführungsform der Anlagerung wird das Verhältnis der Alkylenoxide in de Statistik im Verlaufe der Anlagerung verändert.

Vorzugsweise werden zur Herstellung von Polyurethan-Blockweichschaumstoffen Polyetheralkohole mit einem hohen Gehalt an sekundären Hydroxylgruppen und einem Gehalt an Ethylenoxideinheiten in der Polyetherkette von maximal 30 Gew.-%, bezogen auf das Gewicht des Polyetheralkohols, verwendet. Vorzugsweise haben diese Polyetheralkohole am Kettenende einen Propylenoxidblock. Für die Herstellung von Polyurethan-Formweichschaumstoffen werden insbesondere Polyetheralkohole mit einem hohen Gehalt an primären Hydroxylgruppen und einem Ethylenoxid-Endblock in einer Menge von < 20 Gew.-%, bezogen auf das Gewicht des Polyetheralkohols, verwendet.

Die Anlagerung der Alkylenoxide erfolgt bei den üblichen Bedingungen, bei Temperaturen im Bereich von 60 bis 180°C, bevorzugt zwischen 90 bis 140°C, insbesondere zwischen 100 bis 130°C und Drücken im Bereich von 0 bis 20-bar, bevorzugt im Bereich von 0 bis 10 bar und insbesondere im Bereich von 0 bis 5 bar. Die Mischung aus Startsubstanz und DMC-Katalysator kann vor Beginn der Alkoxylierung gemäß der Lehre von WO 98/52689 durch Strippen vorbehandelt werden.

Eine vorteilhafte Ausführungsform des erfindungsgemäßen Verfahrens besteht darin, zumindest während eines Teils der Umsetzung den Starter und die Alkylenoxide gemeinsam zu dosieren, wie es beispielsweise in WO 97/29146 oder in WO 98/03571 beschrieben ist. Bei dieser Ausführungsform des erfindungsgemäßen Verfahrens kann beispielsweise ein Teil der Startsubstanz mit dem Katalysator vorgelegt werden und dazu nach Anspringen der Reaktion bis zur gewünschten Kettenlänge des Polyetheralkohols kontinuierlich weiterer Starter und Alkylenoxid zugefahren werden. Es ist auch möglich, nur zum Beginn der Anlagerung der Alkylenoxide kontinuierlich Starter zu dosieren und danach bis zur gewünschten Kettenlänge des Polyetheralkohols wie üblich nur Alkylenoxide zu dosieren.

Weiterhin ist es auch möglich, das Verfahren so zu führen, daß in einem kontinuierlichen Reaktor kontinuierlich Starter, Alkylenoxide und gegebenenfalls Katalysator dosiert und kontinuierlich der fertige Polyetheralkohol entnommen wird.

Der Vorteil der beschriebenen Verfahrensweise besteht zum einen darin, daß die Probleme beim Reaktionsstart, insbesondere das verzögerte Anspringen der Reaktion, vermieden werden. Zum anderen ist die Molekulargewichtsverteilung derartiger Polyetheralkohole zumeist enger als die von anderen mittels DMC-Katalysatoren hergestellten Polyetheralkoholen.

Nach Beendigung der Anlagerung der Alkylenoxide wird der Polyetheralkohol nach üblichen Verfahren aufgearbeitet, indem die nicht umgesetzten Alkylenoxide sowie leicht flüchtige Bestandteile entfernt werden, üblicherweise durch Destillation, Wasserdampf- oder Gasstrippen und oder anderen Methoden der Desodorierung. Falls erforderlich, kann auch eine Filtration erfolgen.

Durch die Verwendung der erfindungsgemäßen mikroporösen Katalysatoren können überraschenderweise Polyetherole mit geringer Katalysatorkonzentration hergestellt werden, die sehr gute Eigenschaften aufweisen. Außerdem kann die Induktionszeit am Reaktionsstart deutlich verringert werden.

Die Erfindung soll in den nachfolgenden Beispielen näher erläutert werden.

### Beispiele

### Herstellung von DMC-Katalysatoren

### Beispiel 1 (BK-024):

In einem Rührkessel mit einem Volumen von 8001, ausgestattet mit einem Scheibenrührer, einem Tauchrohr für die Dosierung, einer pH-Elektrode, einer Leitfähigkeitmeßzelle und einer StreulichtSonde, wurden 370 kg wäßrige Hexacyanocobaltsäure (Cobalt-Gehalt: 9 g/l) vorgelegt und unter Rühren auf 50°C erwärmt. Anschließend wurden unter Rühren (Rührleistung 1 W/l) 209,5 kg wäßrige Zinkacetat-Dihydrat-Lösung (Zinkgehalt: 2,7 Gew.-%), welche auf ebenfalls auf 50°C temperiert war, innerhalb von 45 min zugefahren. Anschließend wurden 7,9 kg eines Blockpolymeren aus Etylenoxid und Propylenoxid (Pluronic^{®} PE 6200 (BASF AG) und 10,7 kg Wasser unter Rühren zugegeben. Die Suspension wurde dann auf 55°C erhitzt. Dann wurden 67,5 kg wässrige Zinkacetat-Dihydrat-Lösung (Zinkgehalt: 2,7 Gew.-%) bei 55°C innerhalb 20 min zudosiert.
Die Suspension wurde bei 55°C solange nachgerührt bis der pH-Wert von 4,1 auf 3,7 gefallen war und konstant blieb. Die so erhaltene Fällsuspension wurde anschließend abfiltriert und auf dem Filter mit dem 6fachen Kuchenvolumen an Wasser gewaschen.
Der wasserfeuchte Filterkuchen wurde unter Vakuum bei 110°C Über Nacht getrocknet. Von dem getrockneten Pulver wurde die spezifische Oberfläche mit Stickstoff bei 77 K an Hand von Sorptionsisothermen (Autosorb AS-6 der Firma Quantachrome) gemäß der Lehre von "Pure & Appl. Chem., Vol. 57, No. 4, pp. 603-619, 1985" und "Gregg, S.J.; Sing, K.S.W.; Adsorption, Surface Area and Porosity, Academic Press, London 1982" durchgeführt.
Spezifische Oberfläche: 375 m²/g
Elementaranalyse:
Co: 25,6 Gew. %; Zn: 11,9 Gew.-%

### Vergleichsbeispiel 1

In einem Becherglas wurden 8,0 g Kaliumhexacyanocobaltat(III) in 150 g Wasser gelöst. Dazu gab man eine Lösung aus 20,0 g Zink(II)-chlorid in 30 g Wasser. Der Ansatz wurde dabei mit Hilfe eines Turrax der Firma Janke & Kunkel intensiv gerührt. Anschließend wurde eine Lösung aus 100 ml *tert*.-Butanol in 100 ml Wasser langsam zugegeben. Nach der Zugabe wurde der Ansatz für weitere 10 Minuten gerührt und zentrifugiert. Folgend wurde der Ansatz in 250 ml einer Mischung aus *tert*.-Butanol/Wasser 70:30 resuspendiert, 10 Minuten mit Hilfe des Turrax gerührt und abzentrifugiert. Der Niederschlag wurde anschließend in 250 ml *tert*.-Butanol resuspendiert, mittels Turrax gerührt und abzentrifugiert. Zum Schluß wurde der Katalysator bei 50°C unter Vakuum für ca. 16 Stunden getrocknet. Man erhielt 19,3 g eines weißen Pulvers. Von dem getrockneten Pulver wurde die spezifische Oberfläche wie in Beispiel 1 beschrieben, bestimmt.
Elementaranalyse:
Co: 5,8 Gew. %, Zn: 28 Gew.-%
Spezifische Oberfläche: 59,8 m²/g

### Vergleichsbeispiel 2

100 g Zink(II)-Chlorid, 66,7 ml tert.-Butanol/N-Methyl(2-pyrrolydon)-Mischung (1:1) und 466,7 g Wasser wurden in einem Becherglas vorgelegt. Dazu gab man innerhalb 35 Minuten eine Lösung aus 10 g Kaliumhexacyanocobaltat(III), 26,6 g tert.-Butanol/N-Methyl-(2-pyrrolydon)-Mischung (1:1) und 133,3 g Wasser. Der Ansatz wurde mittels eines Turrax der Firma Janke & Kunkel mit einer 20%iger Leistung gerührt. Anschließend wurde die Turrax-Leistung auf 40% erhöht und für weitere 10 Minuten gerührt. Danach wurde eine Lösung aus 10,7 g Polypropylenglykol mit einem Molekulargewicht M_{w} von 900 g/mol (Pluriol^{®} P 900 der Firma BASF), 2,0 ml Tetrahydrofuran in 66,7 g Wasser zugegeben, drei Minuten mit Hilfe eines Magnetrührers gerührt und anschließend abfiltriert. Der Niederschlag wurde mit einer Lösung aus 173 ml *tert*.-Butanol in 73 ml Wasser resuspendiert und mit dem Turrax (40 %iger Leistung) für zehn Minuten gerührt. Danach wurde eine Lösung aus 2,6 g Polypropylenglykol mit einem Molekulargewicht M_{w} von 900 (Pluriol^{®} P 900 der Firma BASF) in 2,6 ml Tetrahydrofuran zugegeben, mittels eines Magnetrühres für 3 Minuten gerührt und anschließend abfiltriert. Der Niederschlag wurde dann in 246,6 ml *tert*.-Butanol suspendiert und mit dem Turrax gerührt (40 %iger Leistung) bevor man 2,6 g THF und 1,3 g Polypropylenglykol Mw = 900 g/mol zugab. Zum Schluß wurde der Katalysator abfiltriert und bei 50°C unter Vakuum getrocknet. Man erhielt 27,0 g eines weißen Pulvers. Von dem getrockneten Pulver wurde die spezifische Oberfläche wie in Beispiel 1 beschrieben, bestimmt.
Elementaranalyse:
% Co: 5,6; % Zn: 20.0 %;
Spezifische Oberfläche: 17,6 m²/g

### Beispiel 2

In einer 2-Liter Fällapparatur, ausgerüstet mit einer Schrägblattturbine, einer pH-Elektrode, einer Leitfähigkeitsmeßzelle, einer Streulichtsonde und einem getauchten Einleitungsrohr für die Fällagenz wurden 1000 g einer wässrigen Hexacyanocobaltsäure (Co-Gehalt: 9,0 g/l) vorgelegt und auf 50°C erwärmt. Anschliessend wurden unter Rühren (Rührleistung 1 W/l) 582,0 g wässrige Zinkacetat-dihydrat-Lösung (Zinkgehalt: 2,6 Gew.-%), welche ebenfalls auf 50°C temperiert war, in 45 Minuten zugefahren. Danach wurden 21 g eines Blockpolymeren aus Ethylenoxid und Propylenoxid (Pluronic^{®} PE 6200-BASF AG) in 30 g Wasser unter Rühren zugegeben. Die Suspension wurde dann auf 55°C erhitzt. Danach wurden 200 g wässrige Zinkacetat-Dihydrat-Lösung (Zinkgehalt: 2,6 Gew.-%) mit 3,26 Gew.-% Acetonitril bei 55°C innerhalb 10 Minuten zudosiert.

Die Suspension wurde solange nachgerührt, bis der pH-Wert von 4,26 auf 3,45 gefallen war und konstant blieb. Die so erhaltene Fällsuspension wurde anschliessend abgenutscht, resuspendiert, abgenutscht und auf der Nutsche mit dem 6-fachen Kuchenvolumen an Wasser gewaschen.

Der wasserfeuchte Filterkuchen wurde unter Vakuum bei 110°C über Nacht getrocknet.

Von dem getrockneten Pulver wurde die spezifische Oberfläche mit Stickstoff bei 77K an Hand von Sorptionsisothermen (Autosorb^{®} AS-6 der Firma Quantachrome) gemäss der Lehre von "Pure & Appl. Chem., Vol. 57, No. 4, pp. 603-619, 1985" und "Gregg, S.J.; Sing, K.S.W.; Adsorption, Surface Area and Porosity, Academic Press, London 1982", durchgeführt.

Der resultierende DMC-Katalysator hatte eine spezifische Oberfläche von 302 m²/g, einen Gehalt an Cobalt von 13,3 Gew.-% und einen Gehalt an Zink von 29,8 Gew.-%.

### Beispiel 3

In einer Fällapparatur wie in Beispiel 2 beschrieben wurden 1000 g einer wässrigen Hexacyanocobaltsäure (Co-Gehalt: 9,0 g/l) und 21 g oberflächenaktives Mittel Pluronic^{®} PE 6200 BASF AG in 30 g Wasser vorgelegt und auf 60°C erwärmt. Anschliessend wurden unter Rühren (Rührleistung 1 W/l) 787,3 g wässrige Lösung von Zink-acetat-dihydrat (Zinkgehalt: 2,6 Gew.-%), welche ebenfalls auf 60°C temperiert war, in 78,7 Minuten zugefahren. Der pH-Wert in der Apparatur ging von 1,12 (Hexacyanocobaltsäure/PE 6200). über ein Maximum von 4,2 und endete bei 3,7, wo er konstant blieb.

Die so erhaltene Fällsuspension wurde anschliessend abgenutscht, resuspendiert, abgenutscht und auf der Nutsche mit dem 6-fachen Kuchenvolumen an Wasser gewaschen.

Der wasserfeuchte Filterkuchen wurde unter Vakuum bei 110°C über Nacht getrocknet.

Von dem getrockneten Pulver wurde die spezifische Oberfläche mit Stickstoff bei 77K an Hand von Sorptionsisothermen (Autosorb^{®} AS-6 der Firma Quantachrome) gemäss der Lehre von "Pure & Appl. Chem., Vol. 57, No. 4, pp. 603-619, 1985" und "Gregg, S.J.; Sing, K.S.W.; Adsorption, Surface Area and Porosity, Academic Press, London 1982" durchgeführt.

Der resultierende DMC-Katalysator hatte eine spezifische Oberfläche von 476 m²/g, einen Gehalt an Cobalt von 13,7 Gew.-% und von Zink von 30,5 Gew.-%.

### Beispiel 4

In einer Fällapparatur wie in Beispiel 2 beschrieben wurden 1000 g einer wässrigen Kaliumhexacyanocobaltatlösung (Co-Gehalt: 9,0 g/l) und 22,0 g Pluronic^{®} PE 6200 vorgelegt und auf 60°C erwärmt. Anschließend wurden unter Rühren (Rührleistung 1 W/l) 787,3 g wässrige Zink-acetat-dihydrat-Lösung (Zinkgehalt: 2,6 Gew.-%), welche ebenfalls auf 60°C temperiert war, in 98,4 Minuten zugefahren. Der pH-Wert lag zu Anfang dieser einstufigen Fällung bei 10,25 und lag am Ende konstant bei 6,9.

Die so erhaltene Fällsuspension wurde anschliessend abgenutscht, resuspendiert, abgenutscht und auf der Nutsche mit dem 6-fachen Kuchenvolumen an Wasser gewaschen.

Der wasserfeuchte Filterkuchen wurde unter Vakuum bei 110°C über Nacht getrocknet. Von dem getrockneten Pulver wurde die spezifische Oberfläche mit Stickstoff bei 77K an Hand von Sorptionsisothermen (Autosorb^{®} AS-6 der Firma Quantachrome) gemäss der Lehre von "Pure & Appl. Chem., Vol. 57, No. 4, pp. 603-619, 1985" und "Gregg, S.J.; Sing, K.S.W.; Adsorption, Surface Area and Porosity, Academic Press, London 1982" durchgeführt.

Der resultierende DMC-Katalysator hatte eine spezifische Oberfläche von 254 m²/g, einen Gehalt an Cobalt von 13,6 Gew.-% und von Zink von 31 Gew.-%.

### Beispiel 5

In einer Fällapparatur wie in Beispiel 2 beschrieben wurden 1000 g einer wässrigen Hexacyanocobaltsäure (Co-Gehalt: 9,0 g/l) und 12,0 g Pluronic^{®} PE 6200 vorgelegt und auf 50°C erwärmt. Anschliessend wurden unter Rühren (Rührleistung 1 W/l) 594,6 g wässrige Zink-acetat-dihydrat Lösung (Zinkgehalt: 2,6 Gew.-%) mit 1,2 Gew.-% Pluronic^{®} PE 6200, welche ebenfalls auf 50°C temperiert war, in 45,7 Minuten zugefahren. Die Suspension wurde dann auf 55°C erhitzt. Dann wurden 202,0 g wässrige Zinkacetat-Dihydrat-Lösung (Zinkgehalt: 2,6 Gew.-%) mit 1,2 Gew.-% Pluronic^{®} PE 6200, bei 55°C innerhalb 8 Minuten zudosiert. Die Suspension wurde solange nachgerührt, bis der pH-Wert von 3,94 auf 3,46 gefallen war und konstant blieb.

Die so erhaltene Fällsuspension wurde anschliessend abgenutscht, resuspendiert, abgenutscht und auf der Nutsche mit dem 6-fachen Kuchenvolumen an Wasser gewaschen.

Der wasserfeuchte Filterkuchen wurde unter Vakuum bei 110°C über Nacht getrocknet. Von dem getrockneten Pulver wurde die spezifische Oberfläche mit Stickstoff bei 77K an Hand von Sorptionsisothermen Autosorb^{®} AS-6 der Firma Quantachrome) gemäss der Lehre von "Pure & Appl. Chem., Vol. 57, No. 4, pp. 603-619, 1985" und "Gregg, S.J.; Sing, K.S.W.; Adsorption, Surface Area and Porosity, Academic Press, London 1982" durchgeführt. Der resultierende DMC-Katalysator hatte eine spezifische Oberfläche von 323 m²/g, einen Gehalt an Cobalt von 14,2 Gew.-% und von Zink von 32 Gew.-%.

### Prüfung der katalytischen Aktivität

### Allgemeine Versuchsbeschreibung:

In einem druckfesten 20-1-Rührkesselreaktor wurden 6,2 kg eines Propoxylates eines aus Glycerin und Ethylenglykol mit einer Hydroxylzahl von 152 mg KOH/g vorgelegt, die in Tabelle 1 genannte Menge des zu testenden DMC-Katalysators zugesetzt und mit einem Ultra-Turrax gut vermischt. Nach Evakuierung und Inertisierung des Reaktors mittels Stickstoff wurde der Reaktor auf die Synthesetemperatur von 120°C erwärmt und mit der Dosierung von 13,7 kg eines Propylen-/Ethylenoxid-Gemisches im Gewichtsverhältnis von ca. 5:1 begonnen. Die Dosierung wurde unterbrochen, sofern an einem starken Druckanstieg zu erkennen war, daß die Aktivierung des DMC-Katalysators und das Einsetzen der Polymerisation noch nicht erfolgt war. Ein nachfolgender rascher Druckabfall wurde als Aktivierung des Katalysators gewertet und die Dosierung wurde in diesem Falle fortgesetzt. Nach Zugabe der gesamten Menge von Alkylenoxid wurde während einer Nachreaktionszeit von 15 Minuten gerührt, anschließend wurde der Reaktorinhalt zur Entfernung von Alkylenoxidresten evakuiert, das fertige Polyol mit Stickstoff inertisiert und abgelassen.

**Tabelle 1: Versuchsergebnisse und Produktanalysen**

| DMC | Konzentration | Aktivierungszeit | OHZ | Viskosität bei 25°C | unges. Bestandteile |
|---|---|---|---|---|---|
| | ppm | min | mg KOH/g | mPas | meq/g |
| B 1 | 150 | 10 | 47,3 | 584 | 0,010 |
| B 1 | 100 | 7 | 47,1 | 599 | 0,008 |
| B 2 | 100 | 13 | 49,6 | 552 | 0,006 |
| B 3 | 100 | 15 | 48,7 | 573 | 0,006 |
| B 4 | 100 | 16 | 51,0 | 640 | 0,007 |
| B 5 | 100 | 17 | 49,5 | 580 | 0,006 |
| V 1 | 150 | _* | _* | _* | _* |
| V 2 | 150 | _* | _* | _* | _* |
| V 2 | 300 | 52 | 50,4 | 674 | 0,022 |

| | | | | | |
|---|---|---|---|---|---|
| *keine Reaktion B - Beispiel V - Vergleichsbeispiel | | | | | |

Die erfindungsgemäßen Katalysatoren zeigen im Gegensatz zu denen aus den Vergleichsbeispielen eine sehr kurze Aktivierungsphase und ermöglichen bereits bei deutlich niedrigeren Einsatzmengen eine Alkoxylierung. Die erhaltenen Produkte weisen eine geringere Viskosität und weniger ungesättigte Bestandteile auf als Produkte, die mit deutlich höherer Einsatzmenge an Vergleichs-Katalysator erhalten wurden, was auf eine deutlich höhere Aktivität und das Auftreten von weniger Nebenreaktionen schließen läßt.

## Patentansprüche

1. Verfahren zur Herstellung von Polyetheralkoholen durch Anlagerung von Alkylenoxiden an H-funktionelle Startsubstanzen mittels Multimetallcyanidkatalysatoren, **dadurch gekennzeichnet, daß** die Multimetallcyanidkatalysatoren mikroporös sind und eine spezifische Oberfläche von mehr als 100 m²/g, bestimmt durch Stickstoffadsorption bei 77K, aufweisen.

2. Verfahren nach Anspruch 1, **dadurch gekennzeichnet, daß** die Multimetallcyanidkatalysatoren eine spezifische Oberfläche über 200 m²/g aufweisen.

3. Verfahren nach Anspruch 1, **dadurch gekennzeichnet, daß** die Multimetallcyanidkatalysatoren eine spezifische Oberfläche über 450 m²/g aufweisen.

4. Verfahren nach Anspruch 1, **dadurch gekennzeichnet, daß** die Multimetallcyanidkatalysatoren eine spezifische Oberfläche zwischen 100 bis 3000 m²/g aufweisen.

5. Verfahren nach Anspruch 1, **dadurch gekennzeichnet, daß** als Multimetallcyanidkatalysatoren solche der allgemeinen Formel (I)
M¹ₐ[M²(CN)_{b}(A)_{c}]_{d}·fM¹_{g}Xₙ·h(H₂0) eL·kP (I),
eingesetzt werden,
wobei
M¹ ein Metallion, ausgewählt aus der Gruppe, enthaltend Zn²⁺, Fe²⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺, La³⁺, Ce³⁺, Ce⁴⁺, Eu³⁺, Mg²⁺, Ti³⁺, Ti⁴⁺, Ag⁺, Rh¹⁺, Ru²⁺, Ru³⁺, Pd²⁺,
M² ein Metallion, ausgewählt aus der Gruppe, enthaltend Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺,
bedeuten und M¹ und M² verschieden sind,
A ein Anion, ausgewählt aus der Gruppe, enthaltend Halogenid, Hydroxyd, Sulfat, Carbonat, Cyanid, Thio- cyanat, Isocyanat, Cyanat, Carboxylat, Oxalat oder Nitrat,
X ein Anion, ausgewählt aus der Gruppe, enthaltend Halogenid, Hydroxyd, Sulfat, Carbonat, Cyanid, Thio- cyanat, Isocyanat, Cyanat, Carboxylat, Oxalat oder Nitrat,
L ein mit Wasser mischbarer Ligand, ausgewählt aus der Gruppe, enthaltend Alkohole Aldehyde, Ketone, Ether, Polyether, Ester, Polyester, Polycarbonat, Harnstoffe, Amide, Nitrile, und Sulfide oder deren Mischungen,
P ein organischer Zusatzstoff, ausgewählt aus der Gruppe, enthaltend Polyether, Polyester, Polycarbonate, Poly- alkylenglykolsorbitanester, Polyalkylenglykolglycidyl- ether, Polyacrylamid, Poly(acrylamid-co-acrylsäure), Polyacrylsäure, Poly(acrylamid-co-maleinsäure), Poly- acrylnitril, Polyalkylacrylate, Polyalkylmethacrylate, Polyvinylmethylether, Polyvinylethylether, Polyvinyl- acetat, Polyvinylalkohol, Poly-N-vinylpyrrolidon, Poly- (N-vinylpyrrolidon-co-acrylsäure), Polyvinylmethylketon, Poly(4-vinylphenol), Poly(acrylsäure-co-styrol), Oxa- zolinpolymere, Polyalkylenimine, Maleinsäure und Malein- säureanhydridcopolymer, Hydroxyethylcellulose, Poly- acetate, ionische oberflächen und grenzflächenaktive Verbindungen, Gallensäure oder deren Salze, Ester oder Amide, Carbonsäureester mehrwertiger Alkohole und Glycoside
sowie
a, b, d, g und n ganze oder gebrochene Zahlen größer null, c, f, e, h und k ganze oder gebrochene Zahlen größer gleich null sind, wobei mindestens eine Zahl ungleich null ist,
wobei
a, b, c, und d, sowie g und n so ausgewählt sind, daß die Elektroneutralität gewährleistet ist.

6. Verfahren nach Anspruch 4, **dadurch gekennzeichnet, daß** in Formel (I)
M¹ - Zn²⁺, Fe²⁺, Co³⁺, Ni²⁺, La³⁺, Cr²⁺, Cr³⁺, und
M² - Fe²⁺, Fe³⁺, Co²⁺, Co³⁺, Cr²⁺, Cr³⁺, Mn²⁺, Mn³⁺, Ir³⁺, bedeuten.

## Claims

1. A process for preparing polyether alcohols by addition of alkylene oxides onto H-functional starter substances in the presence of multimetal cyanide catalysts, wherein the multimetal cyanide catalysts are microporous and have a specific surface area of more than 100 m²/g, determined by nitrogen adsorption at 77K.

2. The process according to claim 1, wherein the multimetal cyanide catalysts have a specific surface area above 200 m²/g.

3. The process according to claim 1, wherein the multimetal cyanide catalysts have a specific surface area above 450 m²/g.

4. The process according to claim 1, wherein the multimetal cyanide catalysts have a specific surface area of from 100 to 3000 m²/g.

5. The process according to claim 1, wherein the multimetal cyanide catalysts used have the formula (I)
M¹ₐ[M²(CN)_{b}(A)_{c}]_{d}·fM¹_{g}Xₙ·h(H₂O) eL·kP (I),
where
M¹ is a metal ion selected from the group consisting of Zn²⁺, Fe²⁺, Co³⁺, Ni²⁺, Mn²⁺, Co²⁺, Sn²⁺, Pb²⁺, Mo⁴⁺, Mo^{6+,} Al³⁺, V⁴⁺, V⁵⁺, Sr²⁺, W⁴⁺, W⁶⁺, Cr²⁺, Cr³⁺, Cd²⁺, La³⁺, Ce³⁺, Ce⁴⁺, Eu³⁺, Mg²⁺, Ti³⁺, Ti⁴⁺, Ag⁺, Rh¹⁺, Ru²⁺, Ru³⁺, Pd²⁺,
M² is a metal ion selected from the group consisting of Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺,
and M¹ and M² are different,
A is an anion selected from the group consisting of halide, hydroxide, sulfate, carbonate, cyanide, thiocyanate, isocyanate, cyanate, carboxylate, oxalate and nitrate,
X is an anion selected from the group consisting of halide, hydroxide, sulfate, carbonate, cyanide, thiocyanate, isocyanate, cyanate, carboxylate, oxalate and nitrate,
L is a water-miscible ligand selected from the group consisting of alcohols, aldehydes, ketones, ethers, polyethers, esters, polyesters, polycarbonate, ureas, amides, nitriles and sulfides and mixtures thereof,
P is an organic additive selected from the group consisting of polyethers, polyesters, polycarbonates, polyalkylene glycol sorbitan esters, polyalkylene glycol glycidyl ethers, polyacrylamide, poly(acrylamide-co-acrylic acid), polyacrylic acid, poly(acrylamide-co- maleic acid), polyacrylonitrile, polyalkyl acrylates, polyalkyl methacrylates, polyvinyl methyl ether, polyvinyl ethyl ether, polyvinyl acetate, polyvinyl alcohol, poly-N- vinylpyrrolidone, poly(N-vinylpyrrolidone-co- acrylic acid), polyvinyl methyl ketone, poly(4- vinylphenol), poly(acrylic acid-co-styrene), oxazoline polymers, polyalkylenimines, maleic acid and maleic anhydride copolymers, hydroxyethylcellulose, polyacetates, ionic surface-active and interface-active compounds, bile acids and their salts, esters and amides, carboxylic esters of polyhydric alcohols and glycosides,
and
a, b, d, g and n are integers or fractions greater than zero, c, f, e, h and k are integers or fractions greater than or equal to zero, with at least one number being different from zero,
where
a, b, c, and d, and also g and n are chosen so that the compound is electrically neutral.

6. The process according to claim 4, wherein, in the formula (I)
M¹ is Zn²⁺, Fe²⁺, Co³⁺, Ni²⁺, La³⁺, Cr²⁺, Cr³⁺, and
M² is Fe²⁺, Fe³⁺, Co²⁺, Co³⁺, Cr²⁺, Cr³⁺, Mn²⁺, Mn³⁺, Ir³⁺.

## Revendications

1. Procédé de fabrication de polyétheralcools par addition d'oxydes d'alkylène sur des substances de départ à fonction H au moyen de catalyseurs de cyanure de plusieurs métaux, **caractérisé en ce que** les catalyseurs de cyanure de plusieurs métaux sont microporeux et présentent une surface spécifique supérieure à 100 m²/g, déterminée par adsorption d'azote à 77 K.

2. Procédé selon la revendication 1, **caractérisé en ce que** les catalyseurs de cyanure de plusieurs métaux présentent une surface spécifique supérieure à 200 m²/g.

3. Procédé selon la revendication 1, **caractérisé en ce que** les catalyseurs de cyanure de plusieurs métaux présentent une surface spécifique supérieure à 450 m²/g.

4. Procédé selon la revendication 1, **caractérisé en ce que** les catalyseurs de cyanure de plusieurs métaux présentent une surface spécifique comprise entre 100 et 3 000 m²/g.

5. Procédé selon la revendication 1, **caractérisé en ce que** des catalyseurs de cyanure de plusieurs métaux de formule générale (I)
M¹ₐ[M²(CN)_{b}(A)_{c}]_{d}·fM¹_{g}Xₙ·h(H₂O) eL·kP (I)
sont utilisés,
dans laquelle
M¹ signifie un ion métallique choisi dans le groupe contenant Zn²⁺, Fe²⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺, La³⁺, Ce³⁺, Ce⁴⁺, Eu³⁺, Mg²⁺, Ti³⁺, Ti⁴⁺, Ag⁺, Rh¹⁺, Ru²⁺, Ru³⁺, Pd²⁺,
M² signifie un ion métallique choisi dans le groupe contenant Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺,
et M¹ et M² sont différents,
A signifie un anion choisi dans le groupe contenant halogénure, hydroxyde, sulfate, carbonate, cyanure, thiocyanate, isocyanate, cyanate, carboxylate, oxalate ou nitrate,
X signifie un anion choisi dans le groupe contenant halogénure, hydroxyde, sulfate, carbonate, cyanure, thiocyanate, isocyanate, cyanate, carboxylate, oxalate ou nitrate
L signifie un ligand miscible avec l'eau choisi dans le groupe contenant les alcools, aldéhydes, cétones, éthers, polyéthers, esters, polyesters, polycarbonate, urées, amides, nitriles et sulfures ou leurs mélanges,
P signifie un additif organique, choisi dans le groupe contenant les polyéthers, polyesters, polycarbonates, ester de sorbitane de polyalkylène glycol, éther glycidylique de polyalkylène glycol, polyacrylamide, poly(acrylamide-co-acide acrylique), acide polyacrylique, poly(acrylamide- co-acide maléique), polyacrylonitrile, polyacrylates d'alkyle, polyméthacrylates d'alkyle, éther méthylique de polyvinyle, éther éthylique de polyvinyle, polyacétate de vinyle, alcool polyvinylique, poly-N-vinylpyrrolidone, poly(N-vinylpyrrolidone-co-acide acrylique), polyvinylméthylcétone, poly(4-vinylphénol), poly(acide acrylique-co-styrène), polymères d'oxazoline, polyalkylène-imines, copolymères de l'acide maléique et de l'anhydride de l'acide maléique, hydroxyéthylcellulose, polyacétates, composés tensioactifs ioniques, acide biliaire et ses sels, esters ou amides, esters d'acides carboxyliques d'alcools polyvalents et glycosides
et
a, b, d, g et n signifient des nombres entiers ou fractionnaires supérieurs à zéro,
c, f, e, h et k signifient des nombres entiers ou fractionnaires supérieurs ou égaux à zéro, au moins un nombre ne valant pas zéro,
a, b, c et d, ainsi que g et n étant choisis de manière à garantir l'électroneutralité.

6. Procédé selon la revendication 4, **caractérisé en ce que** dans la formule (I)
M¹ signifie Zn²⁺, Fe²⁺, Co³⁺, Ni²⁺, La³⁺, Cr²⁺, Cr³⁺, et
M² signifie Fe²⁺, Fe³⁺, Co²⁺, Co³⁺, Cr²⁺, Cr³⁺, Mn²⁺, Mn³⁺, Ir³⁺_{.}
